**Europäisches Patentamt**

**European Patent Office**

**Office européen des brevets**

(19)

(11) Veröffentlichungsnummer : **0 088 719**
**B1**

(12)     # EUROPÄISCHE PATENTSCHRIFT

(45) Veröffentlichungstag der Patentschrift :
28.05.86

(21) Anmeldenummer : 83730019.3

(22) Anmeldetag : 15.02.83

(51) Int. Cl.⁴ : **B 65 G 51/04**, **B 65 G 51/24**,
**B 65 G 51/32**

(54) **Rohrpostanlage mit Speicherrohren zur Aufnahme von Rohrpostbüchsen.**

(30) Priorität : 10.03.82 DE 3209025

(43) Veröffentlichungstag der Anmeldung :
14.09.83 Patentblatt 83/37

(45) Bekanntmachung des Hinweises auf die Patenterteilung : 28.05.86 Patentblatt 86/22

(84) Benannte Vertragsstaaten :
AT CH DE FR LI

(56) Entgegenhaltungen :
EP-A- 0 056 559
DE-A- 2 054 759
DE-A- 2 303 735
DE-A- 2 348 037
DE-A- 3 009 345
DE-B- 1 191 298
DE-B- 1 481 440
DE-B- 2 618 407
DE-C-   326 434
DE-C-   509 899

(73) Patentinhaber : **Siemens Aktiengesellschaft**
**Berlin und München Wittelsbacherplatz 2**
**D-8000 München 2 (DE)**

(72) Erfinder : **Kardinal, Hans-Joachim, Ing. (grad.)**
**Am Waldhaus 27**
**D-1000 Berlin 38 (DE)**

Jouve, 18, rue St-Denis, 75001 Paris, France

**Beschreibung**

Die Erfindung betrifft eine Rohrpostanlage mit wenigstens zwei über Verzweigungsrichtungen an ein Fahrrohr angeschlossenen Speicherrohren zur Aufnahme von Rohrpostbüchsen. Solche Speicherrohre befinden sich beispielsweise (DE-A-2 348 037) inmitten der Verbindungsrohre von Mehrlinienanlagen, bei denen mehrere oder alle Linien über derartige Verbindungsrohre aneinander angeschlossen sind. Diese Speicherrohre dienen dabei nicht der Bevorratung leerer Rohrpostbüchsen. Ebenso ist bekannt (DE-A-2 054 759), mehrere Fahrrohre einer Mehrlinienanlage über Weicheneinrichtungen an einen gemeinsamen Ein- und Ausgang zu führen, an den mehrere Speicherrohre angeschlossen sind. Die Speicherrohre nehmen dabei im allgemeinen solche Rohrpostbüchsen auf, die für die Übergabe an ein bestimmtes Fahrrohr der Mehrlinienanlage bestimmt sind.

Ein bekannter Leerbüchsenspeicher (DE-A-2 303 735) für eine Wendebetriebsrohrpostanlage sieht einen Teil des Fahrrohres als Leerbüchsenspeicher vor. Dieser Teil des Fahrrohres muß zwangsläufig am Ende des Fahrrohres gelegen sein. Insbesondere für Mehrlinienanlagen würde ein derartiger Leerbüchsenspeicher damit an einem besonders ungünstigen Ort liegen, da der Zugang zu einzelnen Rohrpoststationen, die leere Büchsen anfordern, im Mittel besonders lang wäre und die Rohrpostanlage insofern relativ lang durch Übergabe von Leerbüchsen an anfordernde Stationen blockiert wäre. Ein weiterer bekannter Leerbüchsenspeicher (DE-B-1 191 298) besteht aus einem Rohr, das an die Sendeebene einer zentralen Mehrfachweiche angeschlossen ist und somit allen an die Empfangsebene der zentralen Mehrfachweiche angeschlossenen Stationen zugeordnet werden kann.

Die der Erfindung zugrunde liegende Aufgabe besteht darin, Büchsenspeicher sowohl funktionell als auch apparativ günstig in eine Rohrpostanlage zu integrieren. Dies wird erfindungsgemäß dadurch erreicht, daß die Verzweigungseinrichtungen jeweils durch eine Rohrpoststation gebildet sind, die eine wahlweise in die Flucht des Fahrrohres oder des jeweiligen Speicherrohres verfahrbare, einseitig abgeschlossene Empfangsrohrkammer und eine auf eine von wenigstens zwei verschiedenen Rohrpostbüchsenlängen abgestimmte Längenabtastvorrichtung sowie eine mit der Empfangsrohrkammer verbundene Rohrhülse aufweist, die bei mit dem jeweiligen Speicherrohr fluchtender Stellung der Empfangsrohrkammer fluchtend zwischen zwei an die Rohrpoststation herangeführte Fahrrohrabschnitte eingefahren ist.

Rohrpoststationen, die neben einer zwischen zwei fluchtende Fahrrohranschlüsse einfahrbaren Rohrhülse auch eine einseitig abgeschlossene Rohrkammer aufweisen, sind an sich (DE-A-3 009 345 und europäische Patentanmeldung 0 056 559) bekannt ; an diese Stationen sind jedoch keine Speicherrohre im Sinne der erfindungsgemäßen Rohrpostanlage angeschlossen.

Die bei den bekannten Rohrpostanlagen mit Speicherrohren vorgesehenen Verzweigungseinrichtungen werden durch eine solche Rohrpoststation gebildet, die so in das Fahrrohrnetz integriert wird, daß üblicherweise Rohrpostbüchsen ungehindert die Station durchfahren ; lediglich bei Einschleusen von Rohrpostbüchsen in das Speicherrohr bzw. Abrufen von Rohrpostbüchsen aus dem Speicherrohr wird die Rohrpoststation als Verzweigungseinrichtung tätig. Die Anwendung der Erfindung ist besonders dann als vorteilhaft anzusehen, wenn die übrigen Rohrpoststationen der Rohrpostanlage den gleichen Aufbau aufweisen. Damit ist nur ein einziger Bautyp einer Rohrpoststation eingesetzt und die Verzweigungseinrichtungen ebenfalls durch diesen Bautyp gebildet. Ein damit verbundener Vorteil liegt in der durch Verwendung der gleichen Rohrpoststation vorgegebenen Gleichheit der verwendeten Steuermethode und der Gleichheit der Schnittstellenbedingungen für die Steuerung. Durch die in die Rohrpoststation integrierte Längenabtastvorrichtung wird eine Unterscheidung zwischen verschiedenen Rohrpostbüchsenlängen herbeigeführt ; dies basiert darauf, daß für unterschiedliche Büchsen unterschiedliche Speicherrohre vorgesehen sind und daß somit durch die Längenabtastvorrichtung verhindert wird, daß Rohrpostbüchsen unterschiedlicher Länge in das gleiche Speicherrohr überführt werden.

Bezüglich der Längenabtastvorrichtung sieht eine vorteilhafte Weiterbildung der Erfindung vor, daß die Länge der Empfangskammer jeder Rohrpoststation einer der verschiedenen Rohrpostbüchsenlängen entspricht und die Längenabtastvorrichtung durch zwei Abtaster gebildet ist, von denen der eine im öffnungsnahen Randbereich der Empfangsrohrkammer und der andere in einem kleiner als die Längendifferenz der längenähnlichsten Rohrpostbüchsen bemessenen Abstand in Richtung auf das entsprechende Fahrrohr versetzt angeordnet ist. Durch diese Ausbildung der Längenabtastvorrichtung wird jeweils nur die Rohrpostbüchse als für eine Überführung in das Speicherrohr vorgesehen erkannt, deren Länge der Länge der Empfangsrohrkammer entspricht. Sämtliche anderen Rohrpostbüchsen werden dagegen als nicht für die Einführung in das Speicherrohr erkannt und entsprechend behandelt. Dies gilt für gegenüber der richtigen Länge kürzere oder längere Rohrpostbüchsen unabhängig von der Anzahl der auftretenden unterschiedlichen Längen.

Die einfachste Form der Realisierung der beiden Abtaster der Längenabtastvorrichtung ergibt sich dadurch, daß die Abtaster als Lichtschranken ausgebildet sind. Eine einfache konstruktive Realisierung der unterschiedlichen Empfangsrohrkammern wird dadurch erzielt, daß die Längen der Empfangsrohrkammern durch Einsatz unterschiedlicher Puffer variiert sind.

Um den Transport der Rohrpostbüchsen bis in die Empfangsrohrkammer hinein sicherzustellen, sieht eine vorteilhafte Weiterbildung der Erfindung vor, daß im Endbereich jedes Speicherrohres eine Luftzutrittsöffnung vorgesehen und die Empfangsrohrkammer durch entsprechende Einstellung des Ventils an das Saugluft führende Fahrrohr angeschlossen ist. Mit Hilfe der Saugluft in dem Fahrrohr, in das die entsprechende Rohrpoststation eingefügt ist, werden also die Rohrpostbüchsen aus dem Speicher heraus über die Empfangsrohrkammer in das Fahrrohr überführt. In der umgekehrten Richtung kann zweckmäßigerweise die Schwerkraftwirkung ausgenutzt werden ; das Speicherrohr ist also gegenüber der Horizontale geneigt, insbesondere vertikal, ausgerichtet, so daß die Rohrpostbüchsen übereinander im Speicherrohr gestapelt sind. Bei dieser Anordnung des Speicherrohres werden bei Anlegen von Saugluft an das Speicherrohr alle im Speicherrohr befindlichen Rohrpostbüchsen in Richtung auf die Empfangsrohrkammer gesaugt, wobei nur die oberste der Rohrpostbüchsen in die Empfangsrohrkammer überführt wird. Durch die Verfahrbewegung der Empfangsrohrkammer in Richtung auf das parallele Fahrrohr findet zwangsläufig eine Trennung der obersten von der unmittelbar darunter befindlichen Rohrpostbüchse statt.

Da alle Rohrpostbüchsen gleichzeitig in Richtung auf die Empfangsrohrkammer befördert werden müssen, kann eine zu große Zahl von im Speicherrohr befindlichen Rohrpostbüchsen einen Transport des ganzen Rohrpostbüchsenzuges infolge zu hohen Gesamtgewichtes verhindern. Um dies auszuschalten, ist vorgesehen, daß der Luftzutrittsöffnung ein Schaltventil vorgeschaltet ist und in einem Abstand, der maximal dem durch den Quotienten aus Gewicht einer höchstzulässig beladenen Rohrpostbüchse und dem Büchsenleergewicht gegebenen Vielfachen der entsprechenden Rohrpostbüchsenlänge entspricht, ein weiterer ventilgesteuerter Luftzutritt vorgesehen ist. Ist der gesamte Raum zwischen den beiden Luftzutritten mit Rohrpostbüchsen angefüllt, so wird die am Ende des Speicherrohres befindliche Luftzutrittsöffnung mittels des Schaltventils geschlossen und der andere Lufzutritt geöffnet. Erst wenn alle oberhalb dieses Luftzutritts lagernden Büchsen wieder aus dem Speicherrohr entfernt sind, wird die am Ende des Speicherrohres liegende Luftzutrittsöffnung wieder freigeschaltet.

Das Einschleusen der Rohrpostbüchsen aus dem jeweiligen Fahrrohr in die Empfangsrohrkammer geschieht vorzugsweise derart, daß die Empfangsrohrkammer im Bereich eines ihrer Enden eine nach Einfahren der Empfangsrohrkammer in die Flucht des entsprechenden Fahrrohres eine mittels einer zumindest einen Teilbereich der Empfangsrohrkammer einbeziehenden Luftströmung ankommende Rohrpostbüchse festhaltende Sperrvorrichtung aufweist. Die Rohrpostbüchse wird also mittels der Luftströmung bis an die Sperrvorrichtung herangeführt und in dieser Lage so lange gehalten, bis die Empfangsrohrkammer in die Flucht des Speicherrohres eingefahren ist. Diese Luftströmung kann dadurch hervorgerufen werden, daß die Empfangsrohrkammer im Bereich des die Sperrvorrichtung aufweisenden Endes mittels einer das schaltbare Ventil aufweisenden Zuleitung mit dem zugehörigen Fahrrohr verbunden ist.

Sofern schwerere Rohrpostbüchsen verwendet werden bzw. auch beladene Rohrpostbüchsen in das Speicherrohr überführt werden sollen, kann die Rohrpoststation dadurch an diese Verhältnisse angepaßt werden, daß die Sperrvorrichtung durch einen im Sinne des Aufbaus eines eine ankommende Rohrpostbüchse abbremsenden Luftpolsters wirkenden Verschluß der Empfangsrohrkammer gebildet ist und daß von der Empfangsrohrkammer ein Luftleitkanal abzweigt, der bei mit dem Speicherrohr fluchtender Lage in die Zuleitung einmündet. Dies kann beispielsweise dadurch erreicht werden, daß der Luftleitkanal seitlich aus der Empfangsrohrkammer austritt und in dem die Sperrvorrichtung aufweisenden Endbereich der Empfangsrohrkammer zumindest im Bereich seiner lichten Öffnung fluchtend zur Empfangsrohrkammer verläuft.

Eine weitere konstruktive Ausgestaltung der im Rahmen der Erfindung eingesetzten Rohrpoststation sieht vor, daß die Rohrhülse und die Empfangsrohrkammer in einem gemeinsamen Tragkörper angeordnet sind, der zumindest im Randbereich der offenen Enden der Rohrhülse und der Empfangsrohrkammer parallel zu den benachbarten Begrenzungswänden eines Stationsgehäuses ausgerichtete Stirnflächen aufweist. Diese Ausbildung wird dadurch ergänzt, daß an den Begrenzungswänden fluchtende Rohranschlüsse des jeweiligen Fahrrohrstranges umgreifende Dichtringe angeordnet sind. Damit sind sowohl einfache Antriebsverhältnisse als auch klar definierte Dichtungsverhältnmisse sowohl in den definierten Endlagen als auch in den Zwischenlagen der Empfangsrohrkammer und der Rohrhülse geschaffer.

Bezüglich der Dichtringe ist vorgesehen, daß ringförmige Nuten in den Begrenzungswänden die federnd gelagert und/oder ausgebildet an die Stirnflächen des Tragkörpers angedrückten Dichtringe aufnehmen.

Die Erfindung wird im folgenden anhand eines in zwei Figuren dargestellten Ausführungsbeispiels beschrieben.

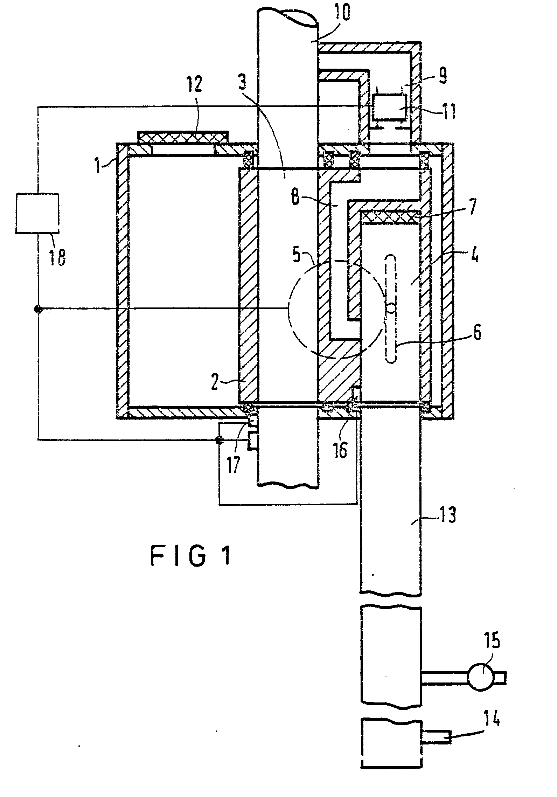

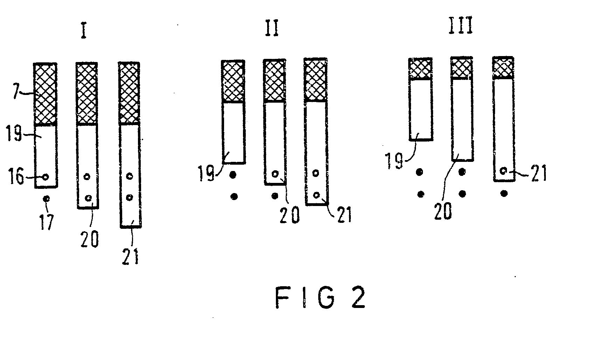

Die Figur 1 zeigt eine als Verzweigungseinrichtung für die Überführung von Rohrpostbüchsen in ein Speicherrohr dienende Rohrpoststation ; in der Figur 2 ist anhand einer schematischen Darstellung Aufbau und Arbeitsweise der in der Rohrpoststation gemäß Figur 1 vorgesehenen Längenabtastvorrichtung veranschaulicht.

Eine als Verzweigungseinrichtung dienende Rohrpoststation weist innerhalb eines Gehäuses 1 einen verschiebbaren Tragkörper 2 auf, in dem eine beidseitig offene Rohrhülse 3 und eine Empfangsrohrkammer 4 gebildet sind. Der Antrieb des Tragkörpers 2 erfolgt über eine nur gestrichelt angedeutete Kurbelschwinge 5, die in eine am Tragkörper 2 angeordnete Geradführung 6 eingreift. Der Endbereich der Empfangsrohrkammer 4 ist mit einem elastischen Puffer 7 abgeschlossen ; zugleich ist der Endbereich der Empfangsrohrkammer 4 mittels einer Luftumleitung 8 überbrückt, die in ihrem oberen Bereich fluchtend zur Empfangsrohrkammer 4 verläuft und in der dargestellten Lage mit einer Zuleitung 9 zum Fahrrohr 10 fluchtet. In die Zuleitung 9 ist ein Ventil 11 eingefügt, das wahlweise den Zugang der Luftumleitung 8 zum Fahrrohr 10 freigibt oder verschließt.

In der dargestellten Lage des Tragkörpers 2 ist neben dem Tragkörper 2 ein Raum freigegeben, der nach oben mittels einer Abdeckplatte 12 verschlossen ist. Damit ist veranschaulicht, daß eine üblicherweise als Sende-, Empfangs- und Durchlaufstation benutzte Rohrpoststation als Verzweigungseinrichtung eingesetzt ist. Im Bereich der Öffnung, die durch die Abdeckplatte 12 verschlossen ist, werden üblicherweise Rohrpostbüchsen, die zum Absenden bestimmt sind, eingeführt.

In der dargestellten Lage des Tragkörpers 2 schließt sich fluchtend an die Empfangsrohrkammer 4 ein Speicherrohr 13 an, dessen Endbereich mittels eines Belüftungsstutzens 14 an Außenluft angeschlossen ist. In einem mehrere Büchsenlängen betragenden Abstand oberhalb des Endbereiches des Speicherrohres 13 ist eine weitere Luftzutrittsleitung vorgesehen, die mittels eines Ventils 15 gesteuert ist. Ist der gesamte Raum zwischen den beiden Luftzutrittsöffnungen mit Rohrpostbüchsen gefüllt, so werden darüber befindliche Rohrpostbüchsen derart befördert, daß das Ventil 15 geöffnet wird ; damit werden nur die oberhalb des Anschlußortes des Ventils 15 am Speicherrohr 13 lagernden Rohrpostbüchsen in Richtung auf die Empfangsrohrkammer 4 befördert.

Im Tragkörper 2 befindet sich in einem dem unteren Randbereich der Empfangsrohrkammer 4 eng benachbarten Bereich eine Lichtschranke 16, die gemeinsam mit einer weiteren Lichtschranke 17 am Gehäuse 1 der Rohrpoststation eine Längenabtastvorrichtung bildet. Die Funktion dieser beiden Lichtschranken 16, 17 bzw. ihr Einwirken auf eine schematisch angedeutete Steuerung 18, die die Kurbelschwinge 5 und das ventil 11 beeinflußt und ihrerseits unter dem Einfluß einer nicht dargestellten zentralen Anlagensteuerung steht, wird anhand der Figur 2 erläutert.

In der Figur 2 wird davon ausgegangen, daß in einer Rohrpostanlage drei verschiedene Büchsenlängen auftreten und daß für die entsprechenden drei Büchsenarten drei verschiedene Speicher eingesetzt werden. Im Fall I ist die Länge des Puffers 7 derart gewählt, daß die kürzeste der drei verschiedenen Rohrpostbüchsen gerade bis an den unteren Randbereich der nicht dargestellten Empfangsrohrkammer reicht.

Damit ist die Lichtschranke 16 durch den unteren Randbereich der Rohrpostbüchse 19 abgedeckt, während die Lichtschranke 17 unbeeinflußt bleibt. Dieses Kriterium dient als Aussage darüber, daß eine Büchse der richtigen Länge vorliegt und daß eine Überführung in das Speicherrohr veranlaßt werden kann. Längere Rohrpostbüchsen 20 bzw. 21 führen jeweils zur Abdeckung beider Lichtschranken 16, 17 ; eine Überführung der Rohrpostbüchsen 20, 21 in das Speicherrohr wird unterbunden.

Im Beispiel II ist die Länge des Puffers 7 derart gewählt, daß die Rohrpostbüchse 20 mit ihrem unteren Randbereich in der Stirnebene der Empfangsrohrkammer liegt. Nur für diese Rohrpostbüchse 20 tritt das Kriterium auf, daß die Lichtschranke 16 unterbrochen, die Lichtschranke 17 dagegen freigegeben ist. Die zu kurze Rohrpostbüchse 19 führt zur Freigabe beider Lichtschranken 16, 17, während die zu lange Rohrpostbüchse 21 zur Abdeckung beider Lichtschranken 16, 17 führt.

Im Fall III ist die Pufferlänge derart gewählt, daß sich für die längste Rohrpostbüchse 21 das Überführungskriterium — Lichtschranke 16 unterbrochen, Lichtschranke 17 freigegeben — ergibt, während für die beiden kürzeren Rohrpostbüchsen 19 und 20 jeweils gilt, daß beide Lichtschranken 16, 17 unbeeinflußt bleiben.

Trotz gleichbleibender Anordnung von nur zwei Lichtschranken 16, 17 kann in jeder als Verzweigungseinrichtung vorgesehenen Rohrpoststation die richtige Büchsenlänge von einer beliebigen Anzahl anderer Büchsenlängen getrennt werden. Die Anpassung der einzelnen Verzweigungseinrichtungen — Rohrpoststationen — an die entsprechende Rohrpostbüchsenlänge geschieht durch entsprechende Bemessung des in der Empfangsrohrkammer vorgesehenen Puffers.

**Patentansprüche**

1. Rohrpostanlage mit wenigstens zwei über Verzweigungseinrichtungen an ein Fahrrohr (10) angeschlossenen Speicherrohren (13) zur Aufnahme von Rohrpostbüchsen, dadurch gekennzeichnet, daß die Verzweigungseinrichtungen jeweils durch eine Rohrpoststation gebildet sind, die eine wahlweise in die Flucht des Fahrrohres (10) oder des jeweiligen Speicherrohres (13) verfahrbare, einseitig abgeschlossene Empfangsrohrkammer (4) und eine auf eine von wenigstens zwei verschiedenen Rohrpostbüchsenlängen abgestimmte Längenabtastvorrichtung (16, 17) sowie eine mit der Empfangsrohrkammer (4) verbundene Rohrhülse (3) aufweist, die bei mit dem jeweiligen Speicherrohr (13) fluchtender Stellung der Empfangsrohrkammer (4) fluchtend zwischen zwei an die Rohrpoststation herangeführte Fahrrohrabschnitte (10) eingefahren ist.

2. Rohrpostanlage nach Anspruch 1, dadurch gekennzeichnet, daß die Länge der Empfangsrohrkammer (4) jeder Rohrpoststation einer der verschiedenen Rohrpostbüchsenlängen entspricht und daß die Längenabtastvorrichtung durch zwei Abtaster (16, 17) gebildet ist, von denen der eine (16) im öffnungsnahen Randbereich der Empfangsrohrkammer (4) und der andere (17) in einem kleiner als die Längendifferenz der längenähnlichsten Rohrpostbüchsen bemessenen Abstand in Richtung auf das entsprechende Fahrrohr versetzt angeordnet ist.

3. Rohrpostanlage nach Anspruch 2, dadurch gekennzeichnet, daß die Aktivierung des einen Abtasters (16) bei gleichzeitiger Nichtaktivierung des anderen Abtasters (17) zur Beeinflussung einer Stationssteuerung (18) im Sinne des Verfahrens der Empfangsrohrkammer (4) in ihre mit dem entsprechenden Speicherrohr (13) fluchtende Lage führt.

4. Rohrpostanlage nach Anspruch 2 oder 3, dadurch gekennzeichnet, daß die Abtaster (16, 17) als Lichtschranken ausgebildet sind.

5. Rohrpostanlage nach einem der Ansprüche 2 bis 4, dadurch gekennzeichnet, daß die Längen der Empfangsrohrkammern (4) durch Einsatz unterschiedlicher Puffer variiert sind.

6. Rohrpostanlage nach einem der Ansprüche 1 bis 5, dadurch gekennzeichnet, daß im Endbereich jedes Speicherrohres (13) eine Luftzutrittsöffnung (14) vorgesehen und die Empfangsrohrkammer (4) durch entsprechende Einstellung eines Ventils (11) an das Saugluft führende Fahrrohr (10) angeschlossen ist.

7. Rohrpostanlage nach Anspruch 6, dadurch gekennzeichnet, daß über der Luftzutrittsöffnung (14) in einem Abstand, der maximal dem durch den Quotienten aus Gewicht einer höchstzulässig beladenen Rohrpostbüchse und Büchsenleergewicht gegebenen Vielfachen der entsprechenden Rohrpostbüchsenlänge entspricht, ein weiterer ventilgesteuerter Luftzutritt (15) vorgesehen ist.

8. Rohrpostanlage nach Anspruch 6, dadurch gekennzeichnet, daß die Empfangsrohrkammer (4) im Bereich eines ihrer Enden eine nach Einfahren der Empfangsrohrkammer (4) in die Flucht des entsprechenden Fahrrohres (10) eine mittels einer zumindest einen Teilbereich der Empfangsrohrkammer (4) einbeziehenden Luftströmung ankommende Rohrpostbüchse festhaltende Sperrvorrichtung (7) aufweist.

9. Rohrpostanlage nach Anspruch 8, dadurch gekennzeichnet, daß die Sperrvorrichtung durch einen im Sinne des Aufbaus eines eine ankommende Rohrpostbüchse abbremsenden Luftpolsters wirkenden Verschluß der Empfangsrohrkammer (4) gebildet ist und daß von der Empfangsrohrkammer (4) ein Luftleitkanal (8) abzweigt, der bei mit dem Speicherrohr (13) fluchtender Lage in die Zuleitung (9) einmündet.

10. Rohrpostanlage nach Anspruch 8 oder 9, dadurch gekennzeichnet, daß die Sperrvorrichtung durch einen Anschlag mit Luftdurchtrittsöffnung gebildet ist.

## Claims

1. A pneumatic tube conveyor system having at least two storage tubes (13) which are connected to a pneumatic tube (10) by means of branching devices and which serve to accommodate carriers, characterised in that the branching devices are respectively formed by a pneumatic tube station which has a unilaterally sealed receiving tube chamber (4) which can be alternatively moved into alignment with the pneumatic tube (10) or with the respective storage tube (13), and which pneumatic tube station has a length scanning device (16, 17) which is adapted to at least two different lengths of pneumatic dispatch carriers, and a tube sleeve (3) which is connected to the receiving tube chamber (4) and which, in the position of the receiving tube chamber (4) which is in alignment with the respective storage tube (13), is moved so as to be in alignment between two pneumatic dispatch carrier sections (10) which are led to the pneumatic tube station.

2. A pneumatic tube conveyor system as claimed in Claim 1, characterised in that the length of the receiving tube chamber (4) of each pneumatic tube station corresponds to one of the different lengths of the pneumatic dispatch carriers ; and that the length scanning device is formed by two scanners (16, 17), one (16) of which is arranged in the edge region of the receiving tube chamber (4) which is close to the opening and the other (17) of which is staggered in the direction of the corresponding pneumatic tube at a distance which is smaller than the difference in length of the linear pneumatic dispatch carriers which are most similar in length.

3. A pneumatic tube conveyor system as claimed in Claim 2, characterised in that the activation of the one scanner (16) with simultaneous non-activation of the other scanner (17) leads to the influencing of a station control unit (18) in the sense of movement of the receiving tube chamber (4) into its position in alignment with the corresponding storage tube (13).

4. A pneumatic tube conveyor system as claimed in Claim 2 or 3, characterised in that the scanners (16, 17) are designed as photo-electric cells.

5. A pneumatic tube conveyor system as claimed in one of Claims 2 to 4, characterised in that the lengths of the receiving tube chambers (4) are varied by using different buffers.

6. A pneumatic tube conveyor system as claimed in one of Claims 1 to 5, characterised in that, in the end region of each storage tube (13), there is arranged an air inlet opening (14), and the receiving tube chamber (4) is connected to the pneumatic tube (10) which carries suction air by a corresponding adjustment of a valve (11).

7. A pneumatic tube conveyor system as claimed in Claim 6, characterised in that a further valve-controlled air inlet (15) is arranged above the air inlet opening (14) at a distance which corresponds at most to the multiple of the corresponding length of the pneumatic dispatch carrier, which multiple is given by the quotient of the weight of a pneumatic dispatch carrier, which is loaded to the permissible maximum, and the deadweight of the carrier.

8. A pneumatic tube conveyor system as claimed in Claim 6, characterised in that, in the region of its ends, the receiving tube chamber (4) has a blocking device (7) which retains a pneumatic dispatch carrier arriving by means of an air stream which covers at least a part-region of the receiving tube chamber (4), when the receiving tube chamber (4) has been moved into alignment with the corresponding pneumatic tube (10).

9. A pneumatic tube conveyor system as claimed in Claim 8, characterised in that the blocking device is formed by a seal of the receiving tube chamber (4) which operates with the structure of an air cushion retarding an incoming pneumatic dispatch carrier ; and that an air-conducting channel (8) which when it is in alignment with the storage tube (13), opens into the supply line (9), branches off from the receiving tube chamber (4).

10. A pneumatic tube conveyor system as claimed in Claim 8 or Claim 9, characterised in that the blocking device is formed by a buffer having an air opening.

**Revendications**

1. Installation pour l'acheminement d'envois pneumatiques avec au moins deux tubes de stockage (13) reliés, par l'intermédiaire de dispositifs de bifurcation, à un tube d'acheminement (10) et servant à recevoir des cartouches, caractérisée par le fait que chacun des dispositifs de bifurcation est constitué par une station qui comporte une chambre tubulaire de réception (4) fermée sur un côté et susceptible d'être amenée, au choix, en alignement avec le tube d'acheminement (10) ou avec le tube de stockage concerné (13), et un dispositif de détection (16, 17) adapté à l'une d'au moins deux longueurs différentes de cartouches, ainsi qu'une douille tubulaire (3) reliée à la chambre tubulaire de réception (4) et qui est susceptible d'être déplacée pour se situer en alignement entre deux sections (10) du tube d'acheminement amenées à la station, lorsque la chambre tubulaire de réception (4) assume sa position d'alignement avec le tube de stockage concerné (13).

2. Installation pour l'acheminement par voie pneumatique selon la revendication 1, caractérisée par le fait que la longueur de la chambre tubulaire de réception (4) de chaque station correspond à l'une des différentes longueurs des cartouches, et que le dispositif de détection de la longueur est constitué par deux détecteurs (16, 17) dont l'un (16) est situé dans la partie marginale, voisine de l'ouverture, de la chambre tubulaire de réception (4), et dont l'autre (17) est située, avec un décalage en direction du tube d'acheminement correspondant, à une distance qui est inférieure à la différence des longueurs des cartouches ayant les longueurs les plus voisines.

3. Installation pour l'acheminement par voie pneumatique selon la revendication 2, caractérisée par le fait que l'activation du premier détecteur (16) avec, en même temps, la non-activation du second détecteur (17), conduit à influencer une commande de station (18) dans le sens du déplacement de la chambre tubulaire de réception (4) dans sa position d'alignement avec le tube de stockage (3) correspondant.

4. Installation pour l'acheminement par voie pneumatique selon la revendication 2 ou 3, caractérisée par le fait que les détecteurs (16, 17) sont réalisés sous la forme de barrières lumineuses.

5. Installation pour l'acheminement par voie pneumatique selon l'une des revendications 2 à 4, caractérisée par le fait que les longueurs des chambres tubulaires de réception (4) sont modifiées par la mise en œuvre de tampons différents.

6. Installation pour l'acheminement par voie pneumatique selon l'une des revendications 1 à 5, caractérisée par le fait qu'il est prévu, dans la partie d'extrémité de chaque tube de stockage (13), une ouverture d'admission d'air (14) et que la chambre tubulaire de réception (4) est reliée par un réglage correspondant d'une soupape au tube d'acheminement (10) dans lequel règne l'air d'aspiration.

7. Installation pour l'acheminement par voie pneumatique selon la revendication 6, caractérisée par le fait qu'au-dessus de l'ouverture d'admission d'air (14) est prévue une seconde admission d'air (15) à contrôle par soupape, et ce à une distance de ladite ouverture (14) qui correspond au maximum au multiple de la longueur de la cartouche, et qui est donné par le quotient entre le poids d'une cartouche à plus grand chargement admissible et le poids à vide de la cartouche.

8. Installation pour l'acheminement par voie pneumatique selon la revendication 6, caractérisée par le fait que la chambre tubulaire de réception (4) comporte, dans la zone de l'une de ses extrémités, un dispositif de blocage (7) qui, après positionnement de la chambre tubulaire de réception (4) dans l'alignement avec le tube d'acheminement correspondant (10), retient une cartouche entrante à l'aide d'un courant d'air intéressant au moins une zone partielle de la chambre tubulaire de réception (4).

9. Installation pour l'acheminement par voie pneumatique selon la revendication 8, caractérisée par le fait que le dispositif de blocage est constitué par un obturateur de la chambre tubulaire de réception (4), agissant dans le sens de l'établissement d'un coussin d'air qui freine une cartouche entrante, et qu'à partir de la chambre tubulaire de réception (4) est dérivé un canal de guidage de l'air (8) qui débouche dans la conduite d'alimentation (9), lorsqu'il est en alignement avec le tube de stockage (13).

10. Installation pour l'acheminement par voie pneumatique selon la revendication 8 ou 9, caractérisée par le fait que le dispositif de blocage est constitué par une butée à ouverture de passage de l'air.

FIG 1

FIG 2